# EUROPÄISCHE PATENTSCHRIFT

(11) **EP 1 956 361 B1**
(45) Veröffentlichungstag und Bekanntmachung des Hinweises auf die Patenterteilung: **26.10.2016**
(21) Anmeldenummer: 08100924.3
(22) Anmeldetag: 25.01.2008
(51) Int. Cl.: G01N 21/31, A01D 41/127, G01N 21/35, G01N 21/85

(54) **Messeinrichtung zur optischen und spektroskopischen Untersuchung einer Probe**
Measuring device for optical and spectroscopic analysis of a sample
Dispositif de mesure destiné à l'examen optique et spectroscopique d'un échantillon

(30) Priorität: 07.02.2007 DE 102007007040
(43) Veröffentlichungstag der Anmeldung: 13.08.2008
(73) Patentinhaber: Deere & Company, Moline, IL 61265 (US); Carl Zeiss Spectroscopy GmbH, 07745 Jena (DE)
(72) Erfinder: Kormann, Dr., Georg, 66482, Zweibrücken (DE); Priesnitz, Rico, 66822, Lebach (DE); Correns, Nico, 99425, Weimar (DE); Rode, Michael, 07743, Jena (DE)
(74) Vertreter: Holst, Sönke

(56) Entgegenhaltungen:
- EP-A- 1 486 769
- EP-A- 1 522 214
- EP-A- 1 671 530
- WO-A-00/08448
- DE-A1- 4 414 622
- DE-U1-202005 001 438
- GB-A- 2 284 477

## Beschreibung

Die Erfindung betrifft eine Messeinrichtung zur optischen und spektroskopischen Untersuchung einer Probe nach dem Oberbegriff des Anspruchs 1.

### Stand der Technik

Im Stand der Technik sind verschiedene Messeinrichtungen beschrieben worden, die dazu dienen, beliebige Materialien optisch zu untersuchen. Derartige Messeinrichtungen finden unter anderem in der Landwirtschaft Verwendung, um Erntegut zu klassifizieren, und in der Lebensmittelindustrie zur Charakterisierung und Überwachung von Rohstoffen. Es wurden auf spektroskopischen Verfahren und/oder auf einer optischen Erfassung der Proben (unter Verwendung von Bildverarbeitungssystemen) basierende Messeinrichtungen beschrieben:
Die DE 199 22 867 A und die DE 10 2004 048 103 A beschreiben spektroskopische Messeinrichtungen für landwirtschaftliche Erntemaschinen, die eine Lichtquelle umfassen, die im Betrieb die Probe, insbesondere Erntegut, mit Licht bestrahlt. Von der Probe reflektiertes Licht wird in einem Spektrometer durch ein dispersives Element, beispielsweise ein Gitter oder ein Prisma, in unterschiedliche, von der Wellenlänge abhängige Richtungen abgelenkt. Detektorelemente empfangen das nunmehr bekannten Wellenlängen zugeordnete Licht, dessen Wellenlängen im sichtbaren Wellenlängenbereich oder im nahen Infrarotbereich liegen. Die Ausgangssignale der Detektorelemente werden einer Auswertungseinrichtung zugeführt, die anhand der gemessenen Spektren bestimmte Parameter der Probe ausrechnet.

Auf einer optischen Erfassung der Proben basierende Messeinrichtungen, die Bildverarbeitungssysteme benutzen, wurden in der US 6 119 442 A, WO 2006/010761 A und EP 1 671 530 A beschrieben. Die Probe wird mit Licht bestrahlt und das reflektierte Licht mit einer Kamera erfasst. Nach einer Bildanalyse mittels des Bildverarbeitungssystems stehen gemäß der US 6 119 442 A beispielsweise Informationen über den Bruchkorngehalt im ausgedroschenen Korn eines Mähdreschers nach dem Durchlauf durch die Drescheinrichtung bzw. den Anteil der Verunreinigungen im gereinigten Korn nach Durchlauf der Reinigungseinrichtung zur Verfügung, die zur selbsttätigen Einstellung des Dreschkorbspalts bzw. Drehzahl des Reinigungsgebläses verwendet werden. Die EP 1 671 530 A schlägt vor, bei einem Feldhäcksler das gehäckselte Erntegut mit einem Blitzlicht zu beleuchten und es mit einer Kamera zu untersuchen, um die tatsächliche Schnittlänge zu evaluieren.

Die DE 20 2005 001 438 U beschreibt eine Messanordnung mit einem Nahinfrarot-Spektrometer und einer Kamera, die von der Probe indirekt reflektiertes Licht erfassen, das von einer Glühlampe stammt. Das Spektrometer und die Kamera sind innerhalb eines gemeinsamen Gehäuses angeordnet und wirken durch ein Fenster mit der Probe zusammen. Durch die kombinierte Auswertung der Datensätze des Spektrometers und der Bilddatensätze der Kamera soll die Genauigkeit der Messungen des Spektrometers verbessert werden, beispielsweise bei der spektroskopischen Messung des Mineralgehalts von Mehl durch Berücksichtigung des Aussehens, der Farbe und der vorhandenen Schwärzungen des Mehls, welche mit der Kamera erfasst werden.

In der als gattungsbildend angesehenen WO 00/08448 A1 wird ein System zur Erfassung der Farbe von Fasern beschrieben, das mit einer Kamera und einem Spektrometer ausgestattet ist. Zwei Lampen, zwischen denen die Kamera und das Spektrometer angeordnet sind, beleuchten die Probe durch ein Fenster hindurch.

Die DE 44 14 622 A1 beschreibt eine Vorrichtung zur Bestimmung von Fremdstoffen in körnigen Medien, die mittels einer Messsonde Licht auf das Medium richtet. Das reflektierte Licht wird spektroskopisch und mit einer Kamera ausgewertet.

In der GB 2 284 477 A wird eine aus Kunststoff bestehende Probe beleuchtet und das reflektierte Licht mittels einer Kamera und eines Spektrometers ausgewertet.

Die EP 1 522 214 A1 beschreibt eine Erntemaschine in Form eines Feldhäckslers, dessen Häckseltrommelmesser mittels einer Kamera oder eines Laserstrahls untersucht werden, um die Schärfe der Häckselmesser zu bestimmen.

Die EP 1 486 769 A2 beschreibt eine Anordnung zur Analyse einer Pulvermischung, die durch ein Rohr geführt und mittels einer Kamera und eines stromab der Kamera angeordneten Spektrometers untersucht wird.

### Aufgabenstellung

Die Beleuchtung der Probe erfolgt in der DE 20 2005 001 438 U durch eine Lichtquelle in Form einer Halogenlampe. Das Licht der Lichtquelle wird von der Kamera und dem Spektrometer gemeinsam genutzt. Wegen der unterschiedlichen Wellenlängen, die das Spektrometer (naher Infrarotbereich) und die Kamera (sichtbares Licht) benötigen, ist eine recht breitbandige Lichtquelle erforderlich, die einen schlechten Wirkungsgrad hat. Eine Optimierung der Lichtquelle für die Wellenlängen des Spektrometers oder der Kamera hätte wiederum eine Verschlechterung der Ausleuchtung in den Wellenlängen des anderen Sensorelements zur Folge. Weiterhin arbeitet die Lichtquelle im Stand der Technik kontinuierlich, was dazu führt, dass die Kamera zur hinreichend scharfen Aufnahme sich relativ schnell bewegender Proben eine recht kurze Verschlussgeschwindigkeit benötigt. Auch in der WO 00/08448 A1 werden kontinuierlich oder gepulst betriebene Glühlampen zur Beleuchtung der Probe verwendet.

Die der Erfindung zu Grunde liegende Aufgabe wird darin gesehen, eine gegenüber dem Stand der Technik verbesserte Messeinrichtung bereitzustellen, die die erwähnten Nachteile nicht oder in einem verminderten Maß aufweist.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die optischen Elemente einer Messeinrichtung zur optischen und spektroskopischen Untersuchung einer Probe sind geschützt und kompakt in einem Gehäuse angeordnet, das in einer Wand ein lichtdurchlässiges Fenster aufweist, in dem eine für Licht transparente (Fenster-) Scheibe angeordnet ist. Innerhalb des Gehäuses befinden sich eine erste Lichtquelle, eine zweite Lichtquelle, ein insbesondere im Nahinfrarotbereich arbeitendes Spektrometer mit einem dispersiven Element und mehreren Detektorelementen, sowie eine Kamera. Eine elektronische Auswertungseinrichtung, die sich im Gehäuse oder außerhalb davon befinden kann, ist mit einem Bildsensor der elektronischen Kamera und mit den Detektorelementen Signal übertragend verbunden.

Die erste Lichtquelle ist dem Spektrometer zugeordnet. Im Messbetrieb strahlt die erste Lichtquelle Licht durch das Fenster auf die Probe. Von der Probe indirekt reflektiertes Licht fällt dann wiederum durch das Fenster in das Spektrometer und wird dort durch das dispersive Element in seine Wellenlängenanteile zerlegt, die dann auf die einzelnen Detektorelemente fallen. Die direkte Reflexion von der Probe und der Scheibe des Fensters fällt nicht in das Spektrometer; es liegt demnach eine klassische Dunkelfeldbeleuchtung vor.

Analog ist die zweite Lichtquelle der Kamera zugeordnet. Im Messbetrieb strahlt die zweite

Lichtquelle Licht durch das Fenster auf die Probe. Von der Probe indirekt reflektiertes Licht fällt dann wiederum durch das Fenster in die Einfallsöffnung der Kamera und wird dort in ein Bildsignal umgewandelt. Die direkte Reflexion von der Probe und der Scheibe des Fensters fällt nicht in die Kamera; es liegt demnach ebenfalls eine klassische Dunkelfeldbeleuchtung vor.

Der Strahlengang des Spektrometers geht von der ersten Lichtquelle durch das Fenster zur Probe und zurück in das Spektrometer. Der Strahlengang der Kamera verläuft von der zweiten Lichtquelle über das Fenster zur Probe und zurück in das Objektiv der Kamera. Nur im Bereich des Fensters und der Probe sind die beiden Strahlengänge deckungsgleich. Die Schärfebereiche für beide Strahlengänge liegen an der äußeren Oberfläche der transparenten Scheibe oder leicht in die Probe verschoben. Kamera und Spektrometer sind außerhalb des Spekularwinkels angeordnet, was eine Verfälschung der Messergebnisse durch direkte Reflexion oder Glanz verhindert.

Auf diese Weise wird dem Spektrometer und der Kamera jeweils eine eigene Lichtquelle zugeordnet, die dem jeweiligen Verwendungszweck optimal angepasst werden kann.

Die erste Lichtquelle und das Spektrometer liegen einer optischen Achse des Fensters, die durch den Normalenvektor der Scheibe des Fensters definiert wird, diametral gegenüber. Analog liegen auch die zweite Lichtquelle und die Kamera der optischen Achse des Fensters diametral gegenüber. Die beiden Lichtquellen sind gegeneinander gegenüber der optischen Achse des Fensters winkelversetzt angeordnet, wie auch die Kamera und das Spektrometer.

Die zweite Lichtquelle ist vorzugsweise in einem Pulsbetrieb betreibbar, um relativ kurze Lichtblitze auf die Probe abgeben zu können und bewegte Proben auch ohne Kamera mit hoher Verschlussgeschwindigkeit scharf abbilden zu können. Für diesen Zweck können eine gebräuchliche Gasentladungsblitzlampe oder eine oder mehrere (weiße oder farbige) Leuchtdioden Verwendung finden. Die erste Lichtquelle gibt hingegen im Betrieb vorzugsweise kontinuierlich Licht ab und ist insbesondere eine Halogenglühlampe.

Die mit dem Bildsensor der Kamera und den Detektorelementen verbundene oder verbindbare Auswertungseinrichtung verwendet die Ausgangssignale der Detektorelemente, um bestimmte Parameter der Probe zu bestimmen. Dabei kann es sich beispielsweise um den Gehalt an organischen Inhaltsstoffen, an Stärke, enzymlöslichen organischen Substanzen, nichtorganischen Mineralstoffen, wie z.B. Natrium und Magnesium (Asche), Rohprotein, Öl, Wasser, Trockensubstanz, Verdaulichkeit, Energiegehalt, Rohfasergehalt und/oder die Faserlänge der Probe handeln. Die Signale der Kamera werden in der Auswertungseinrichtung durch eine Bildbearbeitungssoftware verarbeitet, um andere Parameter der Probe zu bestimmen, wie Größe der Partikel der Probe, ihre Farbe oder einen Anteil an Verunreinigungen. Die von der Bildverarbeitungssoftware ermittelten Parameter der Probe können auch verwendet werden, um die mittels des Spektrometers ermittelten Parameter zu überprüfen und beispielsweise unplausible Parameter ausschließen oder die ermittelten Parameter korrigieren zu können. So kann ein anhand eines Spektrums einer stark verunreinigten Probe ermittelter Parameter als unbrauchbar verworfen werden. Auch kann ein von der Bildverarbeitungssoftware ermittelter Parameter der Probe zur Korrektur der anhand der Spektren ermittelten Parameter dienen, beispielsweise indem die dem Spektrum zu Grunde liegenden Bestandteile der Probe anteilsmäßig identifiziert und die anhand des Spektrums gewonnenen Parameter den einzelnen Bestandteile zugeordnet werden. So kann bei einem Mähdrescher aus den bei der Bildverarbeitung gewonnenen Daten hinsichtlich des Bruchkornanteils und des Verunreinigungsanteils eine Fehlerkorrektur der Daten des Spektrometers vorgenommen werden. Analog können die ermittelten Spektren des Spektrometers bei der Zuordnung der Bildbestandteile Verwendung finden.

Die elektronische Auswertungseinrichtung kann durch die Bildbearbeitungssoftware auch die Länge von Partikeln der Probe evaluieren, indem Grenzen der Partikel identifiziert und vermessen werden. Die Vermessung der Partikellänge ist insbesondere zur Schnittlängenkontrolle in einem Feldhäcksler nützlich. Eine mögliche Begrenzung des Sichtfelds der Kamera durch die Größe des Fensters kann auf verschiedene Arten umgangen werden:
Bei einer möglichen Variante wird eine statistische Analyse durchgeführt und der Auswertungseinrichtung Informationen über die Bewegungsgeschwindigkeit der Partikel und ihre Stärke (d. h. Dicke in Längsrichtung) zugeführt. Die Auswertungseinrichtung identifiziert Schnittkanten im Bild, die dadurch erkannt werden, dass ihre Abmessung etwa der Stärke der Partikel entspricht. Anhand der Anzahl der sichtbaren Schnittkanten, einer der Auswertungseinrichtung zugeführten Information über den jeweiligen Partikeldurchsatz und der Geschwindigkeit wird dann die Länge der Partikel bestimmt.

Eine andere Variante sieht vor, dass die Kamera eine Hochgeschwindigkeitskamera mit einem ein- oder zweidimensionalen Bildsensor ist, der in relativ schneller Folge Gruppen von Bildern aufnehmen kann. Eine derartige Kamera kann eine Bilderfolge aufnehmen, bei der sich die Bildinhalte aneinander anschließen. Durch diese Überlappung kann in der Auswertungseinrichtung ein virtuelles Bild in der Bewegungsrichtung der Partikel erzeugt werden. In diesem Bild werden die Partikelgrenzen identifiziert und vermessen, um die Partikellänge zu bestimmen.

Die erfindungsgemäße Messeinrichtung kann stationär oder mobil zur Untersuchung beliebiger Proben verwendet werden. Ein bevorzugter Einsatzort ist eine selbstfahrende oder gezogene oder angebaute Erntemaschine, an der die Messeinrichtung einen Erntegutstrom untersuchen kann, sei es stromauf oder stromab einer Erntegutaufnahmeeinrichtung der Erntemaschine.

Die Messeinrichtung kann zur georeferenzierten Kartierung der ermittelten Parameter dienen, so dass diese für eine Weiterverwendung zu Zwecken der Präzisionslandwirtschaft genutzt werden können. Die ermittelten Parameter können aber auch zur Kontrolle von Aktoren der Erntemaschine herangezogen werden, indem beispielsweise mit der Messeinrichtung die Schnittlänge in einem Feldhäcksler gehäckselten Ernteguts gemessen, mit einem Sollwert verglichen und zur Regelung der Geschwindigkeit eines Schnittlängengetriebes des Feldhäckslers verwendet wird. Analog kann die Messeinrichtung den Bruchkomanteil stromab einer Drescheinrichtung eines Mähdreschers erfassen und die Größe des Dreschkorbspalts ansteuern, oder es wird der Anteil der Verunreinigungen im Korn am Körnerelevator erfasst und zur Ansteuerung der Gebläsedrehzahl der Reinigung und/oder Sieböffnung verwendet.

### Ausführungsbeispiel

In der Zeichnung ist ein nachfolgend näher beschriebenes Ausführungsbeispiel der Erfindung dargestellt. Es zeigt:
Figur 1 eine schematische seitliche Ansicht einer erfindungsgemäßen Messeinrichtung zur optischen und spektroskopischen Untersuchung einer Probe,
Figur 2 eine Draufsicht auf die Messeinrichtung nach Figur 1,
Figur 3 einen Schnitt durch die Messeinrichtung der Figuren 1 und 2 entlang der Linie 3-3 der Figur 2,
Figur 4 einen Feldhäcksler mit einer Messeinrichtung, und
Figur 5 einen Mähdrescher mit einer Messeinrichtung.

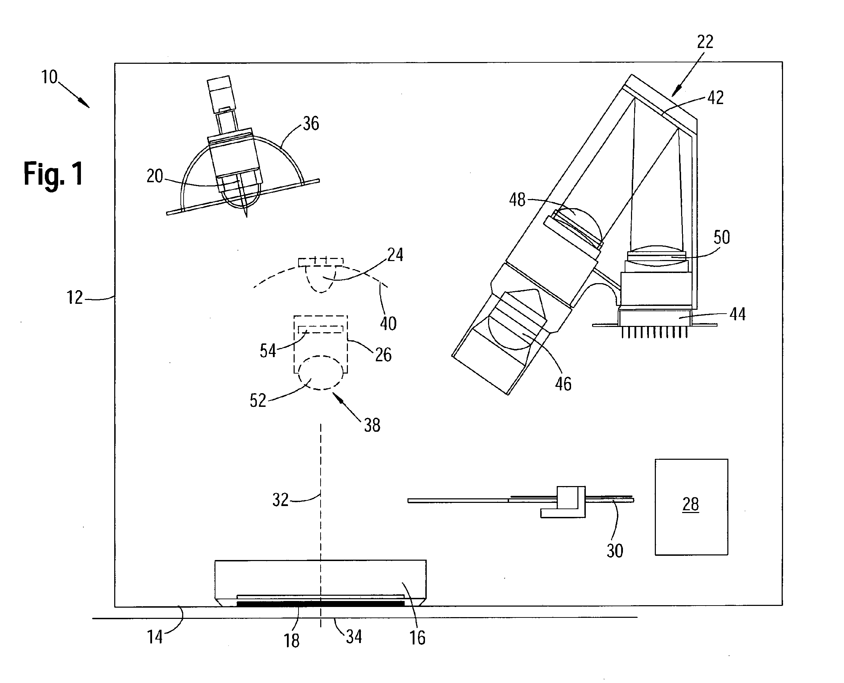

In der Figur 1 ist eine Messeinrichtung 10 in einer seitlichen Ansicht wiedergegeben. Die Messeinrichtung 10 umfasst ein Gehäuse 12, in dessen unten eingezeichneter Wand ein Fenster 16 mit einer darin eingelassenen, lichtdurchlässigen, planparallelen Scheibe 18 aus Saphirglas oder einem anderen, geeigneten Material angeordnet ist. Innerhalb des Gehäuses 12 befinden sich eine erste Lichtquelle 20, ein Spektrometer 22, eine zweite Lichtquelle 24, eine elektronische Kamera 26, eine Auswertungseinrichtung 28 und eine Kalibrieranordnung 30 für das Spektrometer 22. Die Innenseiten der Wände des Gehäuses 12 können geschwärzt sein, um unerwünschte Reflexionen zu vermeiden.

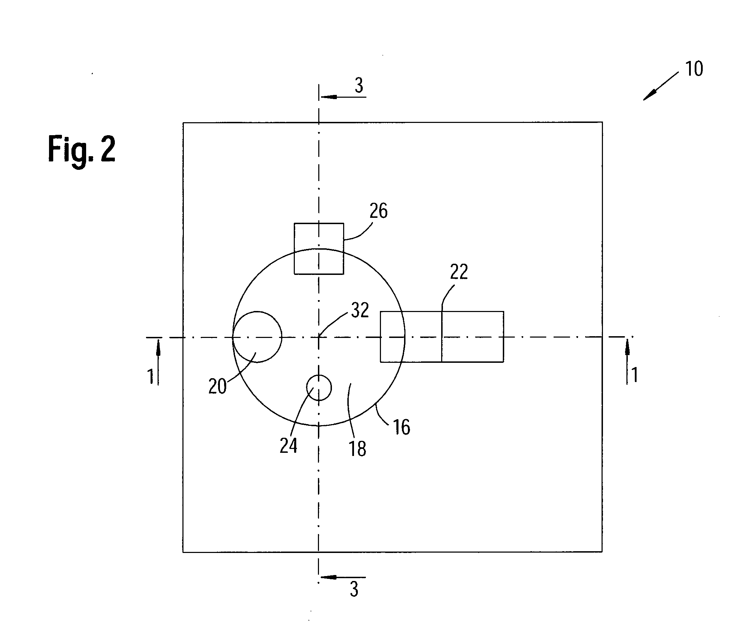

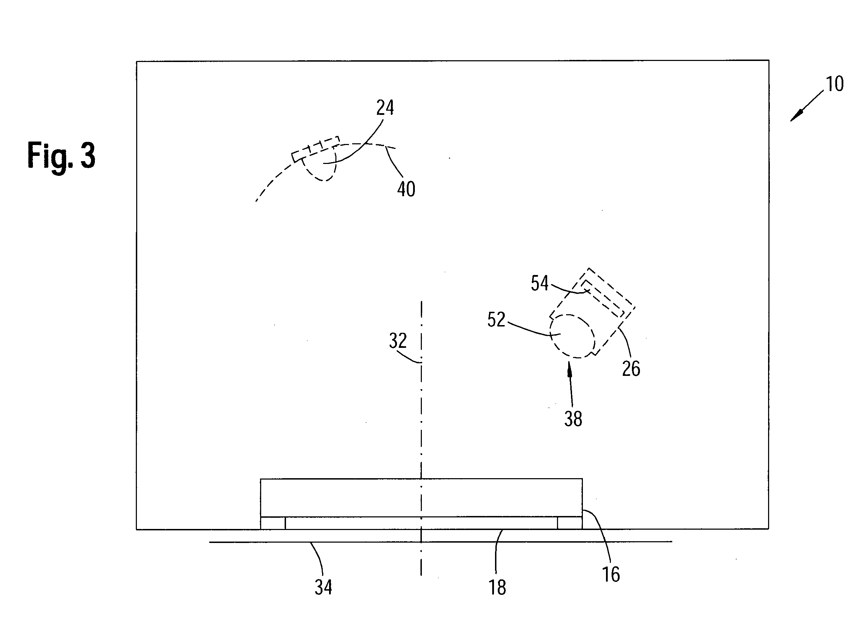

Anhand der Figuren 2 und 3 wird die räumliche Anordnung der optischen Komponenten der Messeinrichtung 10 deutlicher. Gegenüber einer optischen Achse 32 der Scheibe 18 des Fensters 16 ist die erste Lichtquelle 20 in einem Winkel von etwa 10° angeordnet. Das Spektrometer 22 steht, wie man anhand der Figur 2 erkennt, der ersten Lichtquelle 20 bezüglich der optischen Achse 32 diametral gegenüber und schließt mit der optischen Achse 32 einen größeren Winkel von etwa 30° ein. Wie anhand der Figuren 2 und 3 erkennbar ist, liegen sich auch die zweite Lichtquelle 24 und die Kamera 26 bezüglich der optischen Achse 32 diametral gegenüber. Die zweite Lichtquelle 24 ist gegenüber der optischen Achse 32 in einem Winkel von etwa 10° angeordnet, während die Kamera 26 mit der optischen Achse 32 einen größeren Winkel von etwa 30° einschließt. Durch die Anbringung von Kamera 26 und Spektrometer 22 außerhalb des Spekularwinkels der Lichtquellen 20, 24 schließt man aus, dass direkte Reflexionen an der Scheibe 18 oder an der Probe 34, die sich unmittelbar unterhalb der Scheibe 18 befindet, in die Kamera 26 oder in das Spektrometer 22 eindringen und Messungen verfälschen oder durch Überstrahlung unmöglich machen.

Imaginäre, in der Ebene der Figur 2 liegende Verbindungslinien zwischen der Kamera 26 und der zweiten Lichtquelle 24 einerseits und zwischen dem Spektrometer 22 und der ersten Lichtquelle 20 andererseits schließen einen Winkel von etwa 90° ein.

Das Licht von der ersten Lichtquelle 20, bei der es sich um eine im Betrieb kontinuierlich betriebene Halogenlampe handelt, fällt, gebündelt durch einen Reflektor 36, durch die Scheibe 18 auf die Probe 34. Nur das von dieser indirekt, d. h. nicht im Spekularwinkel, reflektierte Licht tritt wieder durch die Scheibe 18 hindurch und in das Spektrometer 22 hinein.

Das Spektrometer 22 umfasst ein dispersives Element 42 in Form eines auf einem Spiegel aufgebrachten Gitters und ein Detektorarray mit einer Anzahl an Detektorelementen 44 und verfügt über abbildende Optikbaugruppen 46, 48, 50. Durch die direkte Abbildung der von der Probe 34 reflektierten Strahlung auf die Detektorelemente 44 können je nach Probe 34 Abbildungen aus der Struktur der Probe 34 auf den Detektorelementen 44 zu Messfehlern führen. Um dies zu verhindern, kann zur Homogenisierung ein Lichtintegrator vorgesehen sein. Die Kalibriereinrichtung 30 dient zur Kalibrierung des Spektrometers 22 und umfasst einen weißen und einen schwarzen Standard, die motorisch in den Strahlengang zwischen der ersten Lichtquelle 20 und dem Spektrometer 22 gefahren werden können. Die Kalibriereinrichtung 30 wird durch die Auswertungseinrichtung 28 gesteuert.

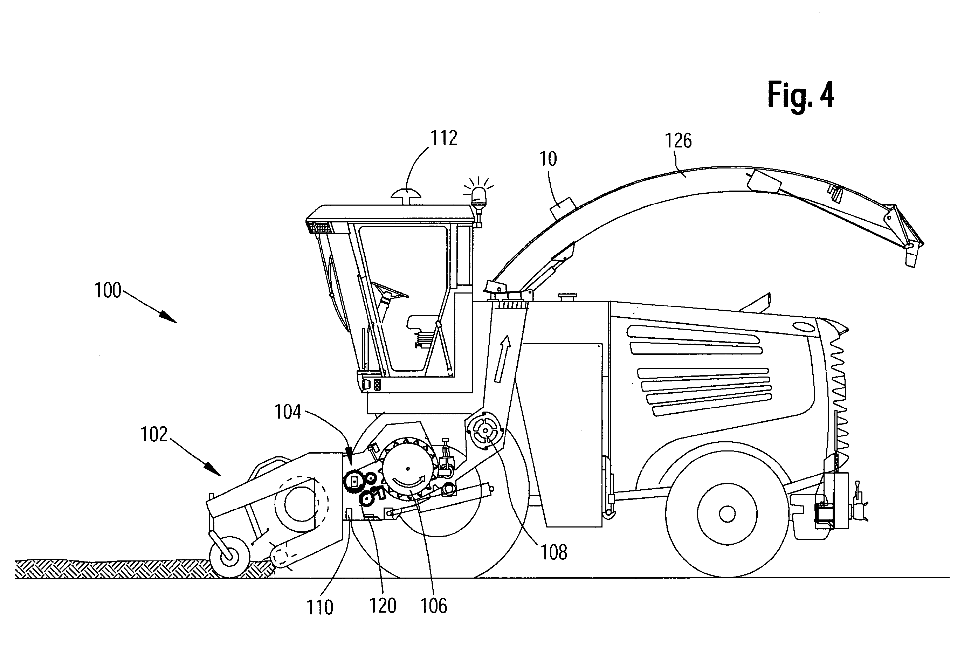

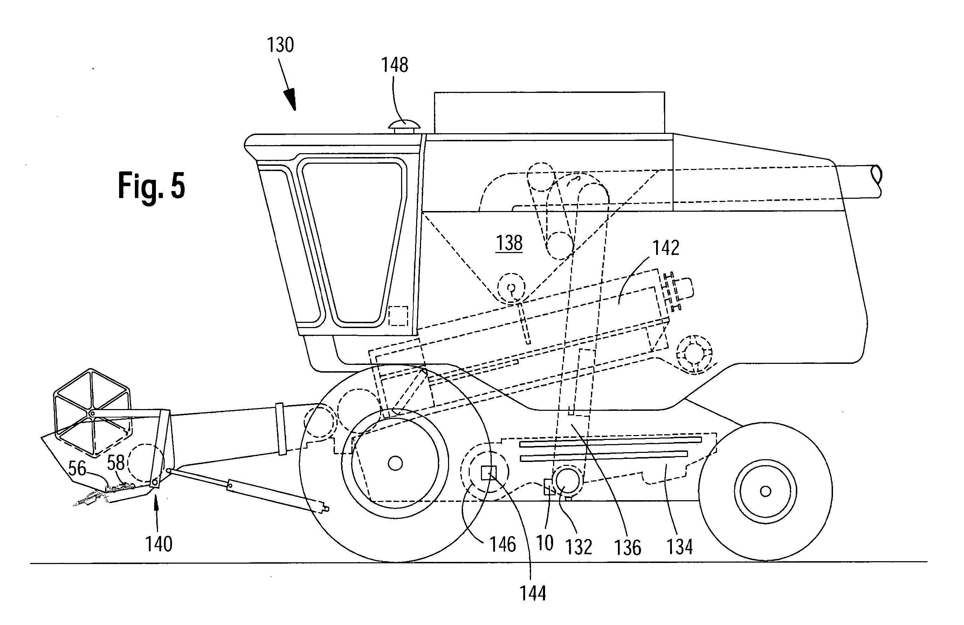

Das Licht von der zweiten Lichtquelle 24, die wahlweise kontinuierlich oder im Pulsbetrieb betreibbar ist, gelangt nach Bündelung durch einen Reflektor 40 durch die Scheibe 18 zur Probe 34 und von dieser durch die Scheibe 18 in eine Einfallsöffnung 38 der Kamera 26. Nur das von dieser indirekt, d. h. nicht im Spekularwinkel, reflektierte Licht tritt wieder durch die Scheibe 18 hindurch und in die Einfallsöffnung 38 der Kamera 26 hinein. Bei der zweiten Lichtquelle 24 handelt es sich um eine weiße Leuchtdiode (LED) oder mehrere, verschiedenfarbige (rot, grün, blau) Leuchtdioden, die zusammen weißes oder Licht in einer auswählbaren Farbe liefern. Die Auswahl zwischen dem Pulsbetrieb und dem Dauerlichtmodus kann durch einen außen am Gehäuse angebrachten Schalter (nicht gezeigt) oder über einen mit der Auswertungseinrichtung 28 verbundenen Bus, der mit einer Bedienereingabeeinrichtung verbunden ist (nicht gezeigt) oder über eine Steckverbindung zwischen der Auswertungseinrichtung und einer Erntemaschine (s. Figuren 4 und 5) erfolgen, die eine Information darüber bereitstellt, ob ein Pulsbetrieb oder ein Dauerlichtmodus benötigt wird. Es wäre auch denkbar, den Betriebsmodus der zweiten Lichtquelle 24 selbsttätig auszuwählen: zunächst wird der Dauerlichtmodus gewählt. Liefert er unscharfe Bilder, was auf eine bewegte Probe 34 hinweist, wird selbsttätig der Pulsbetrieb gewählt.

Die Kamera 26 ist konventionell aufgebaut und umfasst ein an der Einfallsöffnung 38 angeordnetes Objektiv 52, einen zweidimensionalen Bildsensor 54 und ggf. einen Verschluss (nicht gezeigt). Derartige Kameras sind als Fernseh- oder Digitalkameras für stehende oder bewegte Bilder kommerziell verfügbar und bedürfen demnach keiner weiteren Erläuterung.

Das Spektrometer 22 arbeitet insbesondere im nahen Infrarotbereich, oberhalb von etwa 950 nm, während die Kamera 26 unterhalb dieser Wellenlänge empfindlich ist. Die Auswertungseinrichtung 28 ist Signal übertragend mit dem Bildsensor 54 der Kamera 38 und den Detektorelementen 44 des Spektrometers 22 verbunden. Die Auswertungseinrichtung 28 kontrolliert weiterhin die zweite Lichtquelle und kann sie in einen Blitzbetriebsmodus und einen Dauerlichtmodus bringen. Bei ruhender Probe wird vorzugsweise der Dauerlichtmodus gewählt, während der Blitzbetriebsmodus sich für bewegte Proben 34 anbietet. Eine in der Auswertungseinrichtung 28 laufende Bildverarbeitungssoftware identifiziert die Grenzen der Partikel der Probe 34 und bestimmt daraus deren Abmessungen. Außerdem können anhand der Größe, Form und/oder Farbe eventuelle Verunreinigungen erkannt werden. Gleichzeitig werden die Ausgangssignale der Detektorelemente 44 ausgewertet, um aus den Spektren Parameter der Probe zu gewinnen, beispielsweise den Gehalt an bestimmten Inhaltsstoffen.

Die Messeinrichtung 10 kann beispielsweise an einer Austrageinrichtung 126 einer Erntemaschine in Form eines selbstfahrenden Feldhäckslers 100 angebracht werden, wie in der Figur 4 dargestellt. Dort wirkt sie durch die Scheibe 18, die in einer geeigneten Öffnung der Austrageinrichtung 126 angebracht ist, mit einer Probe 34 in Form von Partikeln zusammen, die aus gehäckseltem Erntegut bestehen, welche von einer Erntegutaufnahmeeinrichtung 102 aufgenommen, durch eine Zuführeinrichtung 104 einer Häckseleinrichtung 106 zugeführt, dort zerkleinert und durch ein Gebläse 108 in die Austrageinrichtung 126 übergeben wurden und sich in einem frei strömenden Erntegutstrom der Messeinrichtung 10 präsentieren.

Die Kamera 26 der Messeinrichtung 10 erfasst das vom Erntegut reflektierte, gepulste Licht von der zweiten Lichtquelle 24. Die Ausgangssignale des Bildsensors 54 der Kamera 26 werden durch die Auswertungseinrichtung 28 evaluiert, um die Länge der Partikel der Probe 34 zu bestimmen, die der Schnittlänge entspricht. Falls die Schnittlänge größer als das Bildfeld der Kamera 26 ist, können die Schnittkanten anhand einer der Auswertungseinrichtung 28 zugeführten Information über die mittlere Dicke des Ernteguts identifiziert werden. Anhand der Geschwindigkeit des Ernteguts und des Durchsatzes kann dann durch die Auswertungseinrichtung 28 die tatsächliche Schnittlänge evaluiert werden. Bei einer anderen Ausführungsform ist die Kamera 26 mit einem derart schnellen Verschluss (nicht gezeigt) ausgestattet, so dass sie eine Bilderfolge aufnehmen kann, bei der sich die Bildinhalte aneinander anschließen. Durch diese Überlappung kann ein virtuelles Bild in der Bewegungsrichtung der Partikel erzeugt werden. In diesem Bild werden die Partikelgrenzen identifiziert und vermessen, um die Partikellänge zu bestimmen. In beiden Fällen wird die ermittelte Länge der Partikel mit einer gewünschten Schnittlänge verglichen und dient als Rückkopplungsgröße zur Regelung der Fördergeschwindigkeit der Zuführeinrichtung 104 über einen als Aktor 110 dienenden Ventilblock, der einen Hydraulikmotor 120 zum Antrieb der Zuführeinrichtung 104 ansteuert.

Gleichzeitig erfasst das Spektrometer 22 der Messeinrichtung 10 spektrale Eigenschaften des Ernteguts. Die Auswertungseinrichtung 28 leitet aus den Signalen der Detektorelemente Materialparameter ab, wie Inhaltsstoffe und Feuchtigkeitsgehalts des Ernteguts. Die Materialparameter werden gemeinsam mit einer Positionsinformation, die von einer Empfangsantenne 112 eines satellitenbasierten Positionsbestimmungssystems bereitgestellt wird, in einer Karte elektronisch abgespeichert.

Die von der Auswertungseinrichtung 28 ermittelten Materialparameter können anhand der Ausgangssignale der Kamera 26 überprüft oder korrigiert werden; so können beispielsweise größere Verunreinigungsanteile erkannt und zugehörige Materialparameter verworfen oder korrigiert werden, oder anhand der Ausgangssignale der Kamera 26 wird die Art des Ernteguts erkannt, die wiederum in die Umrechnung der Spektren in Materialparameter eingeht.

Die Figur 5 zeigt eine Erntemaschine in Form eines selbstfahrenden Mähdreschers 130. Die Messeinrichtung 10 ist an der Wand einer Querförderschnecke 132 angebracht und wirkt durch eine Öffnung in der Wand mit dem gereinigten Erntegut (Körnern) zusammen, das von einer Reinigungseinrichtung 134 abgegeben und durch die Querförderschnecke 132 einem Körnerelevator 136 übergeben wird, der es in einem Korntank 138 ablegt. Die Reinigungseinrichtung 134 erhält das Erntegut von einer Erntegutaufnahmeeinrichtung 140, die es einer Dresch- und Trenneinheit 142 zuführt.

Die Auswertungseinrichtung 28 der Messeinrichtung 10 erkennt anhand der Signale des Bildsensors 54, nach Auswertung mittels einer Bildverarbeitungssoftware, den Anteil der Verunreinigungen (z. B. Kaff) im von der Querförderschnecke 132 geförderten Körnerstrom und den dortigen Anteil von Bruchkorn. Der erfasste Verunreinigungsanteil dient zur Ansteuerung eines Elektromotors 144, der ein Gebläse 146 der Reinigungseinrichtung 134 antreibt. Auf diese Weise kann das Gebläse 146 mit einer Geschwindigkeit angetrieben werden, die einen angemessen Anteil an Verunreinigungen bei ebenfalls angemessenen Verlusten ergibt. Alternativ oder zusätzlich kann die Öffnungsgröße der Siebe durch einen zugeordneten Aktor (nicht gezeigt) selbsttätig anhand des ermittelten Anteils der Verunreinigungen verstellt werden. Anhand der Bildverarbeitungssoftware kann auch der Anteil an Bruchkorn ermittelt werden, der zur Ansteuerung des Dreschkorbspalts genutzt werden und/oder neben dem Durchsatz und/oder dem Körnerverlust als ein weiterer Parameter zur Bestimmung der Vortriebsgeschwindigkeit dienen kann.

Das Spektrometer 22 der Messeinrichtung 10 liefert andere Erntegutparameter wie Eiweißgehalt, Stärkegehalt, Ölgehalt und Feuchtigkeitsanteil, die gemeinsam mit einer Positionsinformation, die von einer Empfangsantenne 148 eines satellitenbasierten Positionsbestimmungssystems bereitgestellt wird, in einer Karte abgespeichert werden. Der mit der Kamera 26 erfasste Anteil an Bruchkorn und Verunreinigungen wird in der Auswertungseinrichtung 28 zu einer Fehlerkorrektur der errechneten Erntegutparameter verwendet. Der Algorithmus zur Fehlerkorrekturrechnung wird im Vorfeld empirisch (durch Versuche) ermittelt und eine Art Kennfeld erstellt und in der Auswertungseinrichtung (28) abgespeichert. Dieses Kennfeld dient der Auswertungseinrichtung als Basis der Fehlerkorrekturrechnung.

## Patentansprüche

1. Messeinrichtung (10) zur optischen und spektroskopischen Untersuchung einer Probe (34), mit:
einem Gehäuse (12),
einer im Gehäuse (12) angeordneten, ersten Lichtquelle (20),
einem in einer Wand (14) des Gehäuses (12) angebrachten Fenster (16) mit einer transparenten Scheibe (18), die derart angeordnet ist, dass Licht von der ersten Lichtquelle (20) auf eine außerhalb des Gehäuses (12) angeordnete Probe (34) fallen kann,
einem im Gehäuse (12) angeordneten optischen Spektrometer (22) mit einem dispersiven Element (42) und einer Anzahl an Detektorelementen (44), das von der Probe indirekt reflektiertes und durch das Fenster (16) wieder in das Gehäuse (12) eintretendes Licht von der ersten Lichtquelle (20) aufnehmen kann,
einer im Gehäuse (12) angeordneten, elektronischen Kamera (26), deren Einfallsöffnung (38) durch das Fenster (16) auf die Probe (34) gerichtet ist
und einer elektronischen Auswertungseinrichtung (28), die mit einem Bildsensor (54) der Kamera (26) und den Detektorelementen (44) verbunden ist,
wobei der Kamera (26) eine im Gehäuse (12) angeordnete zweite Lichtquelle (24) zugeordnet ist, die derart angeordnet ist, dass Licht von der zweiten Lichtquelle (24) durch das Fenster (16) auf die Probe (34) fallen kann,
und die Kamera (26) derart angeordnet ist, dass sie von der Probe (34) indirekt reflektiertes Licht von der zweiten Lichtquelle (24), das durch das Fenster (16) wieder in das Gehäuse (12) eintritt, aufnehmen kann,
**dadurch gekennzeichnet, dass** die erste Lichtquelle (20) und das Spektrometer (22) einer optischen Achse (32) des Fensters (16) diametral gegenüberliegend angeordnet sind,
dass die zweite Lichtquelle (24) und die Kamera (26) der optischen Achse (32) des Fensters (16) ebenfalls diametral gegenüberliegend angeordnet sind,
und dass die erste Lichtquelle (20) und die zweite Lichtquelle (24) gegenüber der optischen Achse (32) des Fensters (16) winkelversetzt angeordnet sind.

2. Messeinrichtung (10) nach Anspruch 1, **dadurch gekennzeichnet, dass** die zweite Lichtquelle (24) in einem Pulsbetrieb betreibbar ist.

3. Messeinrichtung (10) nach Anspruch 2, **dadurch gekennzeichnet, dass** die zweite Lichtquelle (24) eine Blitzlampe und/oder eine Leuchtdiode umfasst.

4. Messeinrichtung (10) nach einem der Ansprüche 1 bis 3, **dadurch gekennzeichnet, dass** die erste Lichtquelle (20) kontinuierliches Licht abgeben kann.

5. Messeinrichtung (10) nach einem der Ansprüche 1 bis 4, **dadurch gekennzeichnet, dass** die elektronische Auswertungseinrichtung (28) betreibbar ist, anhand der Ausgangssignale der Detektorelemente (44) des Spektrometers (22) errechnete Parameter der Probe (34) anhand der Bildsensorsignale der Kamera (26) zu überprüfen und/oder zu korrigieren.

6. Messeinrichtung (10) nach einem der Ansprüche 1 bis 5, **dadurch gekennzeichnet, dass** die elektronische Auswertungseinrichtung (28) betreibbar ist, die Länge von Partikeln der Probe (34) zu evaluieren.

7. Messeinrichtung (10) nach Anspruch 6, **dadurch gekennzeichnet, dass** die elektronische Auswertungseinrichtung (28) betreibbar ist, die Länge von Partikeln der Probe (34) zu evaluieren, indem sie eine statistische Analyse durchführt unter Berücksichtigung ihr zugeführter Informationen hinsichtlich der Bewegungsgeschwindigkeit der Partikel und der Stärke der Partikel und einer anhand einer Bildauswertung der Bildsensorsignale der Kamera (26) evaluierten sichtbaren Anzahl der Schnittkanten.

8. Messeinrichtung (10) nach Anspruch 6, **dadurch gekennzeichnet, dass** die elektronische Auswertungseinrichtung (28) betreibbar ist, die Länge von Partikeln der Probe zu evaluieren, indem sie mehrere zeitlich nacheinander aufgenommene Bilder der Kamera (26) zusammenfügt, bei der sich die Bildinhalte aneinander anschließen.

9. Selbstfahrende Erntemaschine (100,) mit einer Messeinrichtung (10) nach einem der vorhergehenden Ansprüche.

10. Erntemaschine (100, 130) nach Anspruch 9, **dadurch gekennzeichnet, dass** die Erntemaschine (100, 130) einen mit der elektronischen Auswertungseinrichtung (28) der Messeinrichtung (10) verbundenen Aktor (110) umfasst, um einen Parameter der Erntemaschine (100, 130) abhängig von mit der Messeinrichtung (10) ermittelten Eigenschaften des Ernteguts zu steuern.

11. Erntemaschine (130) nach Anspruch 9 oder 10, **dadurch gekennzeichnet, dass** die Messeinrichtung (10) stromab einer Reinigungseinrichtung (134) eines Mähdreschers angeordnet ist, dass die Kamera (26) mit einer Bildverarbeitungssoftware in der Auswertungseinrichtung (28) zusammenwirkt, welche betreibbar ist, den Anteil von Verunreinigungen und/oder Bruchkorn im von der Messeinrichtung (10) beobachteten Körnerstrom zu erfassen, und dass die Auswertungseinrichtung (28) betreibbar ist, anhand des Spektrometers (22) erfasste Parameter der Körner, insbesondere Eiweißgehalt, Stärkegehalt, Ölgehalt und/oder Feuchtigkeitsanteil, anhand des mit der Bildverarbeitungssoftware ermittelten Anteils von Verunreinigungen und/oder Bruchkorn zu korrigieren, basierend auf einem in der Auswertungseinrichtung (28) abgespeicherten, auf Versuchen basierenden Kennfeld.

## Claims

1. Measuring device (10) for optical and spectroscopic examination of a sample (34), having:
a housing (12),
a first light source (20) arranged in the housing (12),
a window (16) fitted in a wall (14) of the housing (12) and having a transparent pane (18) which is arranged in such a way that light from the first light source (20) can fall onto a sample (34) arranged outside the housing (12),
an optical spectrometer (22) arranged in the housing (12) and having a dispersive element (42) and a number of detector elements (44) which optical spectrometer can record light from the first light source (20) which is indirectly reflected by the sample and re-enters the housing (12) through the window (16),
an electronic camera (26) which is arranged in the housing (12) and whose incidence opening (38) is directed onto the sample (34), through the window (16),
and an electronic evaluation device (28) which is connected to an image sensor (54) of the camera (26) and to the detector elements (44),
wherein a second light source (24) is assigned to the camera (26), the second light source is arranged in the housing (12) and is arranged in such a way that light from the second light source (24) can fall onto the sample (34) through the window (16),
and the camera (26) is arranged in such a way that it can record light from the second light source (24) which is indirectly reflected by the sample (34) and re-enters the housing (12) through the window (16),
**characterized in that** the first light source (20) and the spectrometer (22) are arranged diametrically opposite an optical axis (32) of the window (16),
**in that** the second light source (24) and the camera (26) are likewise arranged diametrically opposite the optical axis (32) of the window (16),
and **in that** the first light source (20) and the second light source (24) are arranged angularly offset in relation to the optical axis (32) of the window (16).

2. Measuring device (10) according to Claim 1, **characterized in that** the second light source (24) can be operated in a pulsed operation.

3. Measuring device according to Claim 2, **characterized in that** the second light source (24) comprises a flash lamp and/or a light-emitting diode.

4. Measuring device (10) according to one of Claims 1 to 3, **characterized in that** the first light source (20) can emit continuous light.

5. Measuring device (10) according to one of Claims 1 to 4, **characterized in that** the electronic evaluation device (28) can be operated to use image sensor signals on the camera (22) to check and/or to correct parameters of the probe (34) with the aid of the output signals of the detector elements (44) of the spectrometer (22).

6. Measuring device (10) according to one of Claims 1 to 5, **characterized in that** the electronic evaluation device (28) can be operated to evaluate the length of particles of the sample (34).

7. Measuring device (10) according to Claim 6, **characterized in that** the electronic evaluation device (28) can be operated to evaluate the length of particles of the sample (34) by carrying out a statistical analysis while considering information fed to it with regard to the speed of movement of the particles and the size of the particles and a visible number of the intersection edges which is evaluated with the aid of an image evaluation of the image sensor signals of the camera (26).

8. Measuring device (10) according to Claim 6, **characterized in that** the electronic evaluation device (28) can be operated to evaluate the length of particles of the sample by combining a number of images of the camera (26) recorded sequentially in time and in the case of which the contents of the image adjoin one another.

9. Self-propelled harvesting machine (100) having a measuring device (10) according to one of the preceding claims.

10. Harvesting machine (100, 130) according to Claim 9, **characterized in that** the harvesting machine (100, 130) comprises an actuator (110) which is connected to the electronic evaluation device (28) of the measuring device (10) and is intended for controlling a parameter of the harvesting machine (100, 130) as a function of properties of harvest material which are determined by the measuring device (10).

11. Harvesting machine (130) according to Claim 9 or 10, **characterized in that** the measuring device (10) is arranged downstream of a cleaning device (134) of a combine harvester, **in that** the camera (26) cooperates with image processing software in the evaluation device (28) which can be operated to detect the fraction of impurities and/or brokens in the flow of grain observed by the measuring device (10), and **in that** the evaluation device (28) can be operated to use the fraction of impurities and/or brokens determined by the image processing software to correct parameters of the grains, in particular protein content, starch content, oil content and/or moisture content, detected with the aid of the spectrometer (22), doing so on the basis of a family of characteristics stored in the evaluation device (28) and based on experiments.

## Revendications

1. Dispositif de mesure (10) destiné à soumettre à un examen optique et spectroscopique un échantillon (34), comprenant :
un corps (12),
une première source de lumière (20) disposée dans le corps (12),
une fenêtre (16), montée dans une paroi (14) du corps (12), comportant une vitre transparente (18) qui est disposée de manière à ce que la lumière provenant de la première source de lumière (20) puisse être incidente sur un échantillon (34) disposé à l'extérieur du corps (12),
un spectromètre optique (22), disposé dans le corps (12), comportant un élément dispersif (42) et une pluralité d'éléments détecteurs (44) qui peuvent capter la lumière de la première source de lumière (20) réfléchie indirectement par l'échantillon et de nouveau incidente à travers la fenêtre (16) dans le corps (12),
une caméra électronique (26), disposée dans le corps (12), dont l'ouverture d'incidence (38) est dirigée à travers la fenêtre (16) vers l'échantillon (34),
et un dispositif d'évaluation électronique (28) qui est connecté à un capteur d'image (54) de la caméra (26) et aux éléments détecteurs (44),
dans lequel une seconde source de lumière (24) disposée dans le corps (12) est associée à la caméra (26) et est disposée de manière à ce que la lumière provenant de la seconde source de lumière (24) puisse être incidente à travers la fenêtre (16) sur l'échantillon (34),
et la caméra (26) est disposée de manière à pouvoir capter la lumière de la seconde source de lumière (24) indirectement réfléchie par l'échantillon (34) et de nouveau incidente à traves la fenêtre (16) dans le corps (12),
**caractérisé en ce que** la première source de lumière (20) et le spectromètre (22) sont disposés de manière diamétralement opposée à un axe optique (32) de la fenêtre (16),
**en ce que** la seconde source de lumière (24) et la caméra (26) sont également disposées de manière diamétralement opposée à l'axe optique (32) de la fenêtre (16),
et **en ce que** la première source de lumière (20) et la seconde source de lumière (24) sont disposées de manière angulairement décalée par rapport à l'axe optique (32) de la fenêtre (16).

2. Dispositif de mesure (10) selon la revendication 1, **caractérisé en ce que** la seconde source de lumière (24) peut être mise en fonctionnement de manière pulsée.

3. Dispositif de mesure (10) selon la revendication 2, **caractérisé en ce que** la seconde source de lumière (24) comprend une lampe à éclairs et/ou une diode électroluminescente.

4. Dispositif de mesure (10) selon l'une quelconque des revendications 1 à 3, **caractérisé en ce que** la première source de lumière (20) peut délivrer une lumière continue.

5. Dispositif de mesure (10) selon l'une quelconque des revendications 1 à 4, **caractérisé en ce que** l'unité d'évaluation électronique (28) peut être mise en fonctionnement pour vérifier et/ou corriger, sur la base des signaux d'image de la caméra (26), des paramètres de l'échantillon (34) calculés sur la base des signaux de sortie des éléments détecteurs (44) du spectromètre (22).

6. Dispositif de mesure (10) selon l'une quelconque des revendications 1 à 5, **caractérisé en ce que** l'unité d'évaluation électronique (28) peut être mise en fonctionnement pour évaluer la longueur de particules de l'échantillon (34).

7. Dispositif de mesure (10) selon la revendication 6, **caractérisé en ce que** l'unité d'évaluation électronique (28) peut être mise en fonctionnement pour évaluer la longueur de particules de l'échantillon (34) en effectuant une analyse statistique tenant compte des informations qui lui sont fournies en ce qui concerne la vitesse de déplacement des particules et la résistance des particules et d'un nombre visible des arêtes de coupe, évalué sur la base d'un traitement d'image des signaux d'image de la caméra (26).

8. Dispositif de mesure (10) selon la revendication 6, **caractérisé en ce que** l'unité d'évaluation électronique (28) peut être mise en fonctionnement pour évaluer la longueur de particules de l'échantillon en combinant une pluralité d'images, acquises consécutivement dans le temps en provenance de la caméra (26), dans lesquelles les contenus d'image sont mutuellement contigus.

9. Machine de récolte automotrice (100) comportant un dispositif de mesure (10) selon l'une quelconque des revendications précédentes.

10. Machine de récolte (100, 130) selon la revendication 9, **caractérisée en ce que** la machine de récolte (100, 130) comprend un actionneur (110) relié au dispositif d'évaluation électronique (28) du dispositif de mesure (10) pour commander un paramètre de la machine de récolte (100, 130) en fonction de propriétés du produit de récolte qui sont déterminées par le dispositif de mesure (10).

11. Machine de récolte (130) selon la revendication 9 ou 10, **caractérisée en ce que** le dispositif de mesure (10) est disposé en aval d'un dispositif de nettoyage (134) d'une moissonneuse-batteuse, **caractérisée en ce que** la caméra (26) coopère avec un logiciel de traitement d'image dans le dispositif d'évaluation (28), qui a pour fonction de détecter la proportion des impuretés et/ou des grains brisés dans le flux de grains observé par le dispositif de mesure (10), et **en ce que** le dispositif d'évaluation (28) a pour fonction de corriger, sur la base de paramètres des grains, détectés par le spectromètre (22), notamment la teneur en protéines, la teneur en amidon, la teneur en huile et/ou la teneur en humidité, en fonction de la proportion des impuretés et/ou des grains brisés, déterminée par le logiciel de traitement d'image, sur la base d'un champ de caractéristiques issu d'expériences et stocké dans le dispositif d'évaluation (28).
